# EUROPÄISCHE PATENTANMELDUNG

(11) **EP 0 937 610 A2**
(43) Veröffentlichungstag der Anmeldung: **25.08.1999**
(21) Anmeldenummer: 99101516.5
(22) Anmeldetag: 28.01.1999
(51) Int. Cl.: B60R 16/02

(54) **Verfahren und Schaltungsanordnung zum Starten eines Anlassers**

(30) Priorität: 20.02.1998 DE 19807205
(71) Anmelder: Volkswagen Aktiengesellschaft, 38436 Wolfsburg (DE)
(72) Erfinder: Leohold, Jürgen, Dr., 38444 Wolfsburg (DE); Müller, Uwe, 38550 Isenbüttel (DE)

(57) **Zusammenfassung**

Die Erfindung betrifft ein Verfahren zum Starten eines Anlassers für einen Fahrzeugmotor in einem Kraftfahrzeug, das mit einer Starterbatterie und einer Zusatzbatterie zur Versorgung von Verbrauchern ausgerüstet ist. Sie löst die Aufgabe, das Verfahren so zu gestalten, daß die Startsicherheit des Kraftfahrzeugmotors erhöht wird, und eine Schaltungsanordnung zur Durchführung des Verfahrens anzugeben. Dazu werden die Starterbatterie (2) und die Zusatzbatterie (3) beim Startvorgang parallel zum Anlasser (1) geschaltet und die Parallelschaltung nach dem Starten des Anlassers (1) wieder aufgehoben wird, oder es wird jeweils die Batterie (2; 3) zum Anlasser (1) geschaltet, die den besseren Ladezustand aufweist.

## Beschreibung

Die Erfindung betrifft ein Verfahren und eine Schaltungsanordnung zum Starten eines Anlassers für einen Kraftfahrzeugmotor in einem Kraftfahrzeug, das mit einer Zusatzbatterie ausgerüstet ist.

Die Ausrüstung eines Kraftfahrzeuges mit einer Zusatzbatterie (Bordnetzbatterie) zur Versorgung von elektrischen Verbrauchern im Kraftfahrzeug ist bekannt (JP-U-60 144 730, DE 32 35 349 C2, DE 38 41 769 C1). Gegenstand der DE 38 41 769 C1 ist ein Bordnetz, bei dem die Starterbatterie und eine Bordnetzbatterie miteinander verbunden sind, sobald die Lichtmaschine arbeitet. Bei geringer Stromzufuhr durch die Lichtmaschine wird dabei die Bordnetzbatterie durch Ladungsausgleich auf Kosten der Starterbatterie geladen, wenn der Ladezustand der Bordnetzbatterie schlechter ist als der der Starterbatterie. Bei Stillstand der Lichtmaschine wird die Bordnetzbatterie mit den angeschlossenen Verbrauchern abgeschaltet, sobald die Starterbatteriespannung unter einen zulässigen Grenzwert sinkt. Bei Fahrtbeginn kann jedoch die Belastung der Starterbatterie verstärkt werden, wenn ein Ladungsausgleich zuungunsten der Starterbatterie stattfindet. Um einen optimalen Ladezustand der Starterbatterie sicherzustellen, werden beim Gegenstand nach der DE 40 28 242 C2 beide Batterien miteinander verbunden, wenn der Ladezustand der Bordnetzbatterie besser als der der Starterbatterie ist, und getrennt, wenn der Ladezustand der Bordnetzbatterie schlechter ist, so daß die Starterbatterie beim Startvorgang nicht durch eine entladene Bordnetzbatterie zusätzlich belastet wird. Die Starterbatterie, die Bordnetzbatterie mit den angeschlossenen Verbrauchern und der Generator sind dabei parallelgeschaltet.

Zur Verbesserung des Startens des Anlassers ist es bekannt, eine Zusatzbatterie durch Parallelverschaltung dauerhaft mit der Starterbatterie elektrisch zu verbinden und zum Starten des Anlassers parallelgeschaltet mit diesem zu kontaktieren. Durch die dauerhafte Parallelschaltung findet jedoch ein Ladungsausgleich statt, und der Ladezustand der Starterbatterie kann durch eine einen schlechteren Ladezustand aufweisende Zusatzbatterie verschlechtert werden, so daß gegebenenfalls der zum Starten des Anlassers erforderliche Anlaßstrom nicht mehr zur Verfügung steht.

Es ist Aufgabe der Erfindung, ein Verfahren zum Starten eines Anlassers für einen Fahrzeugmotor nach dem Oberbegriff des Anspruchs 1 zu schaffen, durch das die Startsicherheit des Fahrzeugmotors erhöht wird, und eine Schaltungsanordnung zur Durchführung des Verfahrens anzugeben.

Diese Aufgabe wird bei einem Verfahren nach dem Oberbegriff des Anspruchs 1 mit dessen kennzeichnenden Merkmalen und mit einer Schaltungsanordnung nach Anspruch 2 gelöst.

Zur maximalen Nutzung der verfügbaren Batterieleistung werden die Starterbatterie und eine im Kraftfahrzeug angeordnete Zusatzbatterie zur Versorgung von Verbrauchern zum Starten des Anlassers parallel zum Anlasser geschaltet, wobei die Parallelschaltung nach dem Starten des Anlassers wieder aufgehoben wird, so daß die jeweils stromstärkere Batterie während des Nichtbetriebes oder Fahrbetriebes nicht durch die stromschwächere entladen werden kann. Dadurch steht für den Startvorgang der von der stromstärkeren Batterie - in der Regel der Starterbatterie - gelieferte Strom bei gleichzeitiger Erhöhung der Batteriekapazität zur Verfügung, wodurch die Startleistung verbessert wird. Insbesondere werden ein Kaltstart erleichtert und die Startsicherheit insgesamt erhöht. Eine ungewollte Entladung einer der beiden Batterien führt somit nicht zum Verlust der Startbarkeit des Anlassers. Sind gegebenenfalls beide Batterien in einem schlechten Ladezustand, kann das Starten des Anlassers durch deren Parallelschaltung noch ermöglicht werden, während die einzelnen Batterien das Starten des Anlassers nicht mehr veranlassen können.

Alternativ dazu kann das Starten des Anlassers mit der Batterie durchgeführt werden, die den besseren Ladezustand aufweist, ohne daß die Batterien zum Starten parallelgeschaltet werden. Das bedeutet, daß bei ungewollter Entladung der Starterbatterie die Zusatzbatterie zum Starten mit dem Anlasser verbunden wird. Damit kann dieser auch bei entladener Starterbatterie noch gestartet werden.

Die erfindungsgemäße Schaltungsanordnung nach Anspruch 2 ist so gestaltet, daß der Anlasser zu seiner Betätigung mit der Starterbatterie und/ oder der Zusatzbatterie vermittels einer Schalteinrichtung verbindbar ist, die für jede der beiden Batterien ein separates Kontaktelement aufweist.

Dabei sind die Kontaktelemente gemeinsam oder unabhängig voneinander betätigbar.

Nach einer Ausführungsform der erfindungsgemäßen Schaltungsanordnung ist der Anlasser mit einem an der Schalteinrichtung ausgebildeten Festkontaktelement verbunden, welches zwei Kontaktflächen aufweist. Die Kontaktelemente für jede Batterie sind dabei als bewegliche Schaltkontakte ausgebildet.

Die Kontaktelemente sind bei dieser Ausführungsform sowohl über Magnetschalter oder Schalt-/Trennrelais betätigbar.

Zur Parallelschaltung der beiden Batterien kann die Schalteinrichtung auch zwei Schaltkontakte aufweisen, die an einem gemeinsamen Schaltglied angeordnet und gemeinsam betätigbar sind, insbesondere einem an einem Magnetschalter oder an einem Schalt-/Trennrelais ausgebildeten Schaltglied. Bei dieser Lösung können die Batterien nicht separat zum Anlasser geschaltet werden. Alternativ dazu kann der Anlasser anstelle mit einem an der Schalteinrichtung ausgebildeten Festkontaktelement mit einem beweglichen Schaltkontaktelement (z. B. einem Doppel-Kontaktmesser) an der Schalteinrichtung verbunden sein, das mit zwei feststehenden Kontakten in Wirkverbindung steht, die mit jeweils einer Batterie verbunden sind.

Nach einer weiteren Ausführungsform der erfindungsgemäßen Vorrichtung sind die Kontaktelemente der Batterien bzw. die Schalteinrichtung elektronisch ansteuerbar.

Die Erfindung wird nachstehend anhand von Ausführungsbeispielen erläutert. In der zugehörigen Zeichnung zeigen schematisch:
- Fig. 1:: eine Schaltungsanordnung mit unabhängig voneinander schaltbaren Batterien,
- Fig. 2:: eine Schaltungsanordnung mit über einen Magnetschalter parallelschaltbaren Batterien und
- Fig. 3.: eine Schaltungsanordnung mit über ein Schalt-/ Trennrelais schaltbaren Batterien.

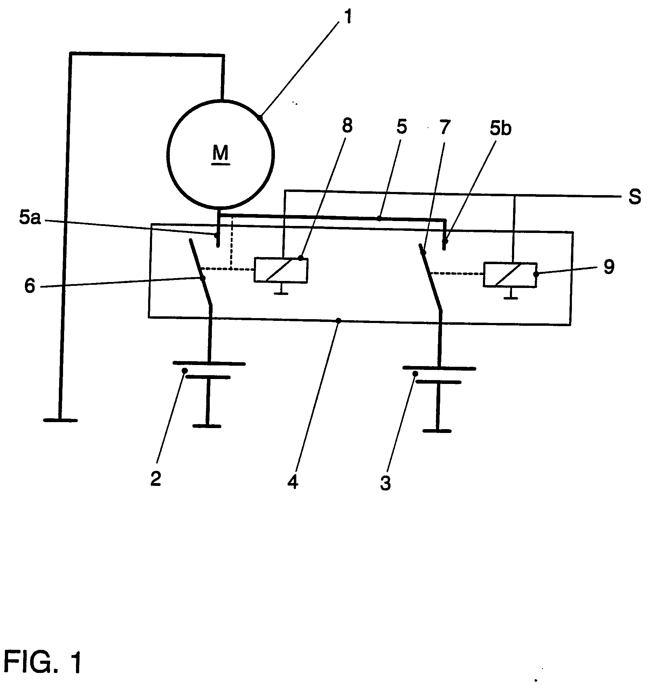

Fig. 1 zeigt eine Schaltungsanordnung zum Starten eines Anlassers 1 für einen Fahrzeugmotor in einem Kraftfahrzeug, das mit einer Starterbatterie 2 und einer Zusatzbatterie 3 zur Versorgung von Verbrauchern ausgerüstet ist (nicht dargestellt). Der Anlasser 1 ist mit einem aus einer Schalteinrichtung 4 ausgebildete Festkontaktelement 5 verbunden, das zwei Kontaktflächen 5a und 5b für zwei unabhängig voneinander betätigbare Schaltkontakte 6 und 7 aufweist. Dabei ist der Schaltkontakt 6 mit der Starterbatterie 2 verbunden und durch einen Magnetschalter 8 betätigbar, und der Schaltkontakt 7 ist mit der Zusatzbatterie 3 verbunden und durch ein Schalt-/ Trennrelais 9 betätigbar. Die beiden Schaltkontakte 6 und 7 können gemeinsam oder getrennt voneinander betätigt werden, wobei die Betätigung in Abhängigkeit vom Ladezustand der Batterien 2 und 3 gesteuert wird (Steuerschaltung S nicht dargestellt).

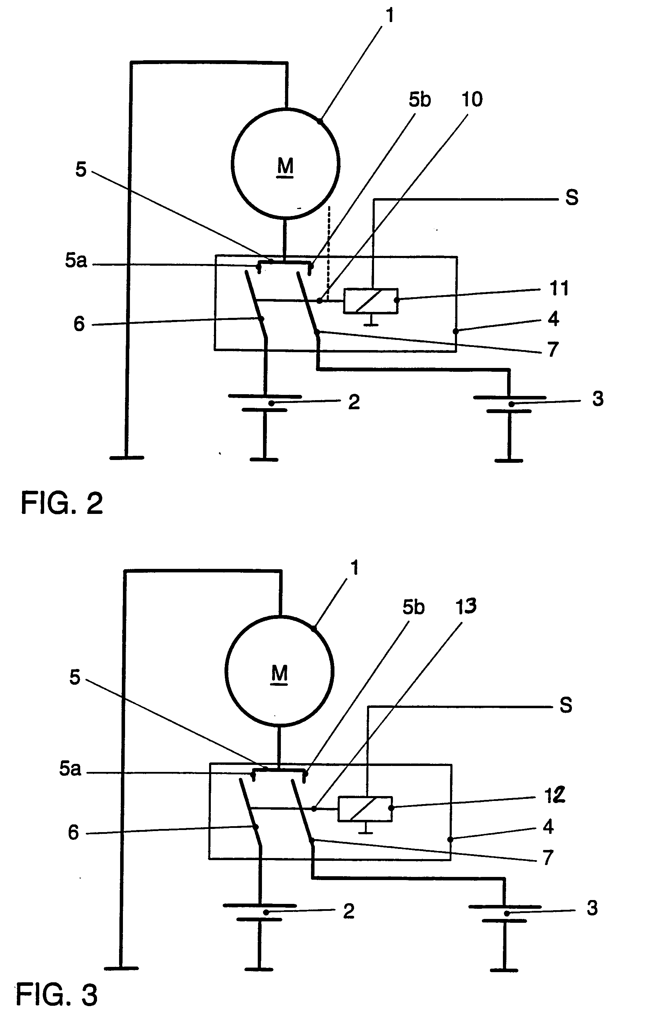

Fig. 2 zeigt eine Schaltungsanordnung, bei der die Schaltkontakte 6 und 7 am elektromagnetisch betätigbaren Glied 10 eines Magnetschalters 11 angeordnet und gemeinsam betätigbar sind. Fig. 3 zeigt eine alternative Anordnung, bei der anstelle des Magnetschalters 11 (Fig. 2) ein Schalt-/ Trennrelais 12 mit einem Anker 13 als Träger für die Schaltkontakte 6 und 7 angeordnet ist.

### BEZUGSZEICHEN

- 1: Anlasser
- 2: Starterbatterie
- 3: Zusatzbatterie
- 4: Schalteinrichtung
- 5: Festkontaktelement
- 5a: Kontaktfläche
- 5b: Kontaktfläche
- 6: Schaltkontakt
- 7: Schaltkontakt
- 8: Magnetschalter
- 9: Schalt-/Trennrelais
- 10: betätigbares Glied
- 11: Magnetschalter
- 12: Schalt-/Trennrelais
- 13: Anker

## Patentansprüche

1. Verfahren zum Starten eines Anlassers für einen Fahrzeugmotor in einem Kraftfahrzeug, das mit einer Starterbatterie und einer Zusatzbatterie zur Versorgung von Verbrauchern ausgerüstet ist, **dadurch gekennzeichnet,** daß die Starterbatterie (2) und die Zusatzbatterie (3) beim Startvorgang parallel zum Anlasser (1) geschaltet werden und die Parallelschaltung nach dem Starten des Anlassers (1) aufgehoben wird, oder daß jeweils die Batterie (2; 3) zum Anlasser (1) geschaltet wird, die den besseren Ladezustand aufweist.

2. Schaltungsanordnung zur Durchführung des Verfahrens nach Anspruch 1, **dadurch gekennzeichnet,** daß der Anlasser (1) zu seiner Betätigung mit der Starterbatterie (2) und/ oder der Zusatzbatterie (3) vermittels einer Schalteinrichtung (4) verbindbar ist, die für jede Batterie (2; 3) ein separates Kontaktelement (6; 7) aufweist.

3. Schaltungsanordnung nach Anspruch 2, **dadurch gekennzeichnet,** daß die Kontaktelemente (6; 7) gemeinsam oder unabhängig voneinander betätigbar sind.

4. Schaltungsanordnung nach Anspruch 2 oder 3, **dadurch gekennzeichnet,** daß der Anlasser (1) mit einem an der Schalteinrichtung (4) ausgebildeten Festkontaktelement (5) verbunden ist, das zwei Kontaktflächen (5a; 5b) aufweist, und daß die Kontaktelemente (6; 7) als bewegliche Schaltkontakte ausgebildet sind.

5. Schaltungsanordnung nach einem der Ansprüche 2 bis 4, **dadurch gekennzeichnet,** daß mindestens eines der Kontaktelemente (6; 7) durch einen Magnetschalter betätigbar ist.

6. Schaltungsanordnung nach einem der Ansrüche 2 bis 4, **dadurch gekennzeichnet,** daß mindestens eines der Kontaktelemente durch ein Schalt-/Trennrelais (9) betätigbar ist.

7. Schaltungsanordnung nach Anspruch 4, **dadurch gekennzeichnet,** daß die Schalteinrichtung (4) ein Magnetschalter (11) mit einem elektromagnetisch betätigbaren Glied (10) ist, an dem die Schaltkontakte (6; 7) fest angeordnet sind.

8. Schaltungsanordnung nach Anspruch 4, **dadurch gekennzeichnet,** daß die Schalteinrichtung (4) ein Schalt-/Trennrelais (12) mit einem durch einen Elektromagneten betätigkbaren Anker (13) ist, an dem die Schaltkontakte (6; 7) fest angeordnet sind.

9. Schaltungsanordnung nach Anspruch 2 oder 3, **dadurch gekennzeichnet,** daß die Kontaktelemente (6; 7) elektronisch ansteuerbar sind.
